# EUROPEAN PATENT SPECIFICATION

(11) **EP 0 758 783 B1**
(45) Date of publication and mention of the grant of the patent: **28.11.2001**
(21) Application number: 96111084.8
(22) Date of filing: 10.07.1996
(51) Int. Cl.: G11B 5/39

(54) **Spin valve magneto-resistive effect magnetic head and system**
Spinventil-Magnetkopf mit magnetoresistivem Effekt und System
Tête magnétique à effet magnétorésistif à soupape de spin et système

(30) Priority: 11.08.1995 JP 20560195
(43) Date of publication of application: 19.02.1997
(73) Proprietor: FUJITSU LIMITED, Kawasaki-shi, Kanagawa 211-8588 (JP)
(72) Inventor: Kanai, Hitoshi, c/o Fujitsu Limited, Kawasaki-shi, Kanagawa 211 (JP)
(74) Representative: Seeger, Wolfgang, Dipl.-Phys.

(56) References cited:
- EP-A- 0 598 581
- EP-A- 0 687 917
- EP-A- 0 694 788
- US-A- 5 408 377
- SIXTH JOINT MAGNETISM AND MAGNETIC MATERIALS - INTERNATIONAL MAGNETICS CONFERENCE, ALBUQUERQUE, NM, USA, 20-23 JUNE 1994, vol. 30, no. 6, pt.1, ISSN 0018-9464, IEEE TRANSACTIONS ON MAGNETICS, NOV. 1994, USA, pages 3819-3821, XP000601749 ANTHONY T C ET AL: "Magnetoresistance of symmetric spin valve structures"

## Description

### BACKGROUND OF THE INVENTION

### 1.Field of the Invention:

The present invention relates generally to a spin valve magneto-resistive effect magnetic head and a magnetic disc drive, and more particularly to a spin valve magneto-resistive effect magnetic head, in which a change of a signal magnetic field read from a magnetic medium is converted into a changing ratio of an electrical resistance according to a spin valve magneto-resistive effect, and a magnetic disc drive with the spin valve magneto-resistive effect magnetic head.

### 2.Description of the Prior Art:

In a magnetic sensor or a magnetic head, a magneto-resistive effect device made of NiFe is used as magnetic material. Also, because of the requirement of a higher sensitivity for the magnetic sensor and the magnetic head, a giant magneto-resistive (GMR) film has been drawn attention to obtain a reading signal having a high intensity. As a type of GMR film, a spin valve magneto-resistive effect film has been particularly drawn attention because the film can be comparatively easily produced and a changing ratio of an electrical resistance in the film placed in a low magnetic field is larger than that in a normal magneto-resistive (MR) device. A magneto-resistive effect magnetic head operated according to a spin valve magneto-resistive effect is disclosed in USP No. 5,206,590 or USP No. 5,159,513.

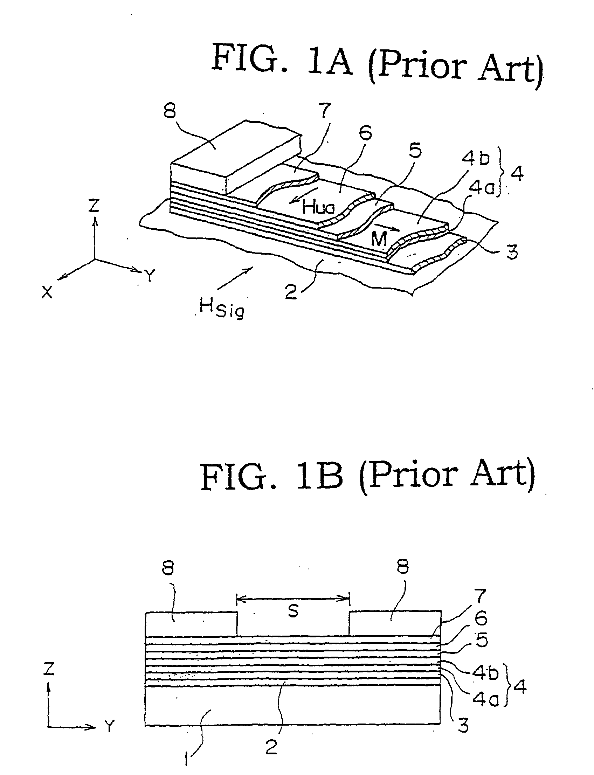

An example of a conventional magneto-resistive effect magnetic head is shown in Fig. 1A, and a cross-sectional view of the conventional magneto-resistive effect magnetic head is shown in Fig. 1B.

As shown in Figs. 1A and 1B, an Al₂O₃TiC substrate 1, an alumina layer 2, a under layer 3 made of tantalum, a free magnetic layer 4 composed of an NiFe layer 4a and a Co layer 4b, a non-magnetic metal layer 5 made of Cu, a pinned magnetic layer 6 made of Co and an antiferro-magnetic layer 7 made of FeMn are arranged in a film thickness direction in that order to manufacture a spin valve MR device. In this case, the film thickness direction is expressed by a Z direction.

The layers of a multilayer structure ranging from the under layer 3 to the antiferro-magnetic layer 7 are respectively patterned in a planar rectangular shape, and a pair of electrode terminals 8 made of Au is arranged in a pair of regions placed at both edges of the antiferro-magnetic layer 7 which is placed in an upper position of the multilayer structure. A region of the multilayer structure placed between the electrode terminals 8 functions as a signal detecting region (or a sensing region) S. A shorter side of the rectangularly shaped pattern is directed in an X direction, and a longer side of the rectangularly shaped pattern is directed in a Y direction.

In the pinned magnetic layer 6, a exchange coupling magnetic field Hua is generated in a magnetization direction agreeing with the X direction because of a exchange coupling between the pinned magnetic layer 6 and the antiferro-magnetic layer 7. Therefore, the pinned magnetic layer 6 is fixedly magnetized in the X direction, a magnetization direction of the layer 6 is not changed by a signal magnetic field Hsig directed in the X direction.

A free magnetic layer denotes a magnetic layer in which a direction of the magnetization M is easily changed by the signal magnetic field Hsig, and a pinned magnetic layer denotes a magnetic layer in which a direction of the magnetization M is not easily changed by the external signal magnetic field Hsig as compared with the magnetization of the free magnetic layer.

The reason that the free magnetic layer 4 is composed of two layers represented by the NiFe layer 4a and the Co layer 4b is as follows.

First, an output of a magneto-resistive effect obtained in the free magnetic layer 4 is twice or more times as high as that obtained in a free magnetic layer made of only NiFe. Secondly, the Co layer 4b functions as a buffer layer to prevent a interfacial diffusion of Co and NiFe between the non-magnetic metal layer 5 and the NiFe layer 4a which is caused by heating the layers 4a and 5.

The Co layer 4b itself is a semi-hard magnetic film. However, a two-layer structure of NiFe and Co softens the layer 4 because of a exchange coupling between the NiFe layer 4a and the Co layer 4b. Therefore, the two-layer structure makes the layer 4 function as a free magnetic layer. The magnetization M of the free magnetic layer 4 having the two-layer structure is directed in the Y direction (or a magnetization easy axis direction) perpendicular to the magnetization direction (or the X direction) of the pinned magnetic layer 6 in cases where a strength of the signal magnetic field Hsig is zero. The direction of the magnetization M in the free magnetic layer 4 changes with the signal magnetic field Hsig.

A total electric resistance of the multilayer structure ranging from the under layer 3 to the antiferro-magnetic layer 7 changes in proportional to a cosine (cosθ) of an angle θ between the magnetization direction of the pinned magnetic layer 6 and the magnetization direction of the free magnetic layer 4. A constant current passes through the signal detecting region (or the sensing region) S placed in the multilayer structure from one electrode terminal 8 to the other electrode terminal 8. When the total electric resistance changes, a differential voltage between the electrode terminals 8 changes. The change of the total electric resistance is calculated according to an Ohm's law by detecting the change of the differential voltage.

The reason that the magnetization direction of the pinned magnetic layer 6 and the magnetization direction of the free magnetic layer 4 are perpendicular to each other is to make the total electric resistance linearly change with respect to the signal magnetic field Hsig.

To prevent the diffusion of Co and NiFe between the non-magnetic metal layer 5 and the NiFe layer 4a caused by heating the layers 4a and 5, it is required that the thickness of the Co layer 4b is set to 30 Å (1Å = 10⁻¹ nm) or more.

The inventors experimentally examined the relationship between an external magnetic field and an electric resistance in the spin valve MR device in which the film thickness of the Co layer 4b composing the free magnetic layer 4 is set to 30 Å or more.

A first sample used for an experiment has the same layer configuration as that of the spin valve MR device shown in Figs. 1A and 1B. That is, a film thickness of the under layer 3 made of Ta is 50Å, a film thickness of the NiFe layer 4a is 20Å, a film thickness of the Co layer 4b is 55Å, a film thickness of the non-magnetic metal layer 5 made of Cu is 32Å, a film thickness of the pinned magnetic layer 6 made of Co is 55Å, and a film thickness of the antiferro-magnetic layer 7 made of FeMn is 150Å.

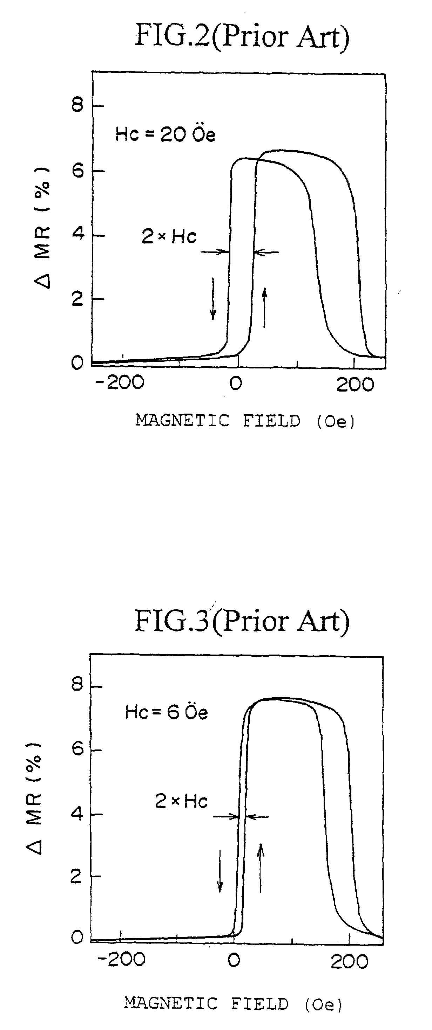

As a result of the experiment, magneto-resistive (MR) effect characteristics shown in Fig. 2 are obtained. This MR effect characteristics are obtained by continuously increasing and decreasing the strength of an external magnetic field in a range from -200 oersteds (Oe) (1Oe = 79,58 A/m) to 200 oersteds (Oe). As shown in Fig. 2, it is realized that a strength difference in the external magnetic field between leading and trailing edges of a characteristic curve placed in the neighborhood of a specific point at which the strength of the external magnetic field is zero is about 40 oersteds (Oe). Because the strength difference is equivalent to a value twice as high as a coercive force Hc of the spin valve MR device, the coercive force Hc of the first sample is no less than 20 oersteds (Oe), and sensitivity of the spin valve MR device for the signal magnetic field Hsig is degraded.

The reason that the coercive force Hc is increased to 20 oersteds (Oe) is because the free magnetic layer 4 has the Co layer 4b with a thick film. Therefore, the inventors tried to decrease the coercive force Hc of the spin valve MR device by thinning the Co layer 4b.

A second sample used for the experiment has the same layer configuration as that of the spin valve MR device shown in Figs. 1A and 1B. That is, a film thickness of the under layer 3 made of Ta is 50Å, a film thickness of the NiFe layer 4a is 55Å, a film thickness of the Co layer 4b is 20Å, a film thickness of the non-magnetic metal layer 5 made of Cu is 26Å, a film thickness of the pinned magnetic layer 6 made of Co is 55Å, and a film thickness of the antiferro-magnetic layer 7 made of FeMn is 150Å.

As a result of the experiment, the MR effect characteristics shown in Fig. 3 are obtained, and the coercive force Hc of the spin valve MR device is decreased to 6 oersteds (Oe), and a changing ratio ΔMR of an electric resistance in the spin valve MR device is increased as compared with that shown in Fig. 2.

However, because the Co layer 4b is thinned to 20Å, the interfacial diffusion of Co and NiFe between the non-magnetic metal layer 5 and the NiFe layer 4a caused by heating the layers 4a and 5 cannot be prevented, and there is a drawback that the property of softening the free magnetic layer 4 is lowered.

A spin valve magneto-resistive effect magnetic head according to the upper clause of claim 1 is known from US-A-5 408 377.

### SUMMARY OF THE INVENTION

An object of the present invention is to provide a spin valve magneto-resistive effect magnetic head, in which a interfacial diffusion of materials between a non-magnetic metal layer and a free magnetic layer caused by heating the layers is prevented and a reading signal having a high intensity is output, and a magnetic recording apparatus with the magnetic head.

This object has been achieved by the features of claim 1. For a system comprising a magnetic recording medium this object has been achieved by claim 11.

The spin valve magneto-resistive effect magnetic head according to the present invention has a free magnetic layer manufactured in a two-layer structure composed of a CoFe layer and an NiFe layer or another two-layer structure composed of a CoFe layer and an NiFe type alloy layer.

Even though a film thickness of the CoFe layer is equal to or more than 30Å, the free magnetic layer manufactured in the two-layer structure has a softened magnetic property. In addition, it is experimentally ascertained that the free magnetic layer having the CoFe layer lessens a coercive force of the spin valve magneto-resistive effect device. In this case, to lessen the coercive force, it is preferred that a film thickness of the NiFe layer be set to 10 Å or more, a composition ratio of Co in the CoFe layer be set to 90 wt% and a composition ratio of Fe in the CoFe layer be set to 10 wt%.

Because the film thickness of the CoFe layer is equal to or more than 30Å, a interfacial diffusion of materials between a non-magnetic metal layer and the free magnetic layer caused by heating the layers can be reliably prevented, and a softened magnetic property of the free magnetic layer can be maintained.

Also, it is experimentally ascertained that a changing ratio of an electric resistance of the magnetic head changing with the strength of a magnetic field is increased by adopting the free magnetic layer manufactured in the two-layer structure having the CoFe layer.

In cases where the NiFe type alloy layer is made of NiFeCr, NiFeNb or NiFeRh, noise caused according to an anisotropic magneto-resistive (AMR) effect can be reduced. In addition, because a specific resistance of NiFeCr, NiFeNb or NiFeRh is higher than that of NiFe, a current utilizing efficiency in the magnetic head can be heightened, and a reading signal having a high intensity can be output.

Also, in cases where a pinned magnetic layer is made of the same constitutional material as that of the CoFe layer of the free magnetic layer, a volume of target material consumed for forming each of the layers in a sputtering operation can be reduced.

### BRIEF DESCRIPTION OF THE DRAWINGS

Fig. 1A is a diagonal view of a part of a conventional spin valve magneto-resistive effect magnetic head;
Fig. 1B is a cross-sectional view of the conventional spin valve magneto-resistive effect magnetic head shown in Fig. 1A;
Fig. 2 is a characteristic view showing the relationship between the change of a magnetic field strength and a changing ratio of an electric resistance in the conventional spin valve magneto-resistive effect magnetic head in Fig. 1A;
Fig. 3 is a characteristic view showing the relationship between the change of a magnetic field strength and a changing ratio of an electric resistance in the conventional spin valve magneto-resistive effect magnetic head in cases where a film thickness of a Co layer of a free magnetic layer is thinned;
Fig. 4A is a diagonal view of a part of a spin valve magneto-resistive effect magnetic head according to an embodiment of the present invention;
Fig. 4B is a cross-sectional view of the spin valve magneto-resistive effect magnetic head shown in Fig. 4A;
Fig. 5 is a characteristic view showing the relationship between the change of a magnetic field strength and a changing ratio of an electric resistance in the spin valve magneto-resistive effect magnetic head shown in Fig. 4A; and
Fig. 6 is a cross-sectional view of a part of a magnetic recording apparatus with the spin valve magneto-resistive effect magnetic head shown in Fig. 4A; and
Fig.7 is a plan view of a magnetic disc drive mainly composed of a slider having the MR head and a magnetic disc according to the present invention.

### DESCRIPTION OF THE PREFERRED EMBODIMENTS

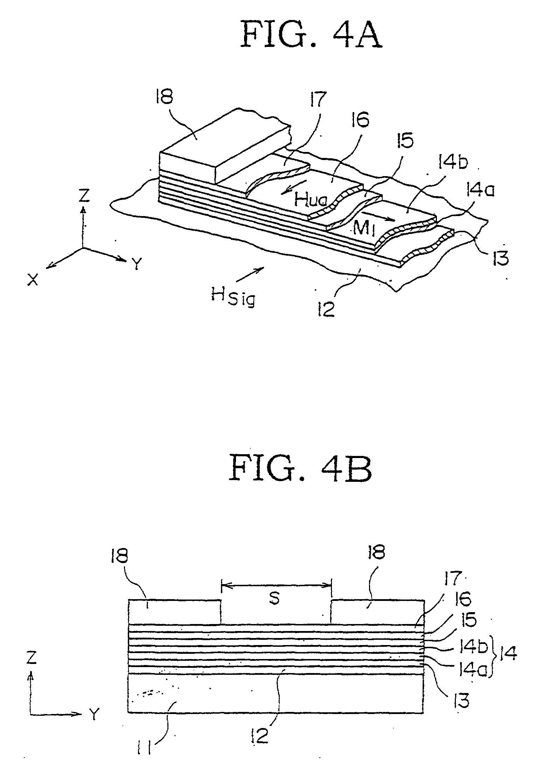

Preferred embodiments of a spin valve magneto-resistive effect magnetic head according to the present invention are described with reference to Figs. 4A and 4B.

As shown in Figs. 4A and 4B, a spin valve magneto-resistive effect device (or a spin valve magneto-resistive effect magnetic head) comprises a substrate 11 made of Al₂O₃TiC or the like, an alumina layer 12, a under layer 13 made of tantalum, a free magnetic layer 14 manufactured in a two-layer structure of an NiFe layer 14a and a Co₉₀Fe₁₀ layer 14b, a non-magnetic metal layer 15 made of Cu, a pinned magnetic layer 16 made of Co₉₀Fe₁₀ and an antiferro-magnetic layer 17 made of FeMn arranged in a film stacking direction in that order. In this case, the film stacking direction is expressed by a Z direction.

The layers of a multilayer structure ranging from the under layer 13 to the antiferro-magnetic layer 17 are respectively patterned in a planar rectangular shape, and a pair of electrode terminals 18 made of Au is arranged in a pair of regions placed at both edges of the antiferro-magnetic layer 17 which is placed in an upper position of the multilayer structure. A region of the multilayer structure placed between the electrode terminals 18 functions as a signal detecting region (or a sensing region) S. A shorter side of the rectangularly shaped pattern is directed in an X direction, and a longer side of the rectangularly shaped pattern is directed in a Y direction.

In the pinned magnetic layer 16, a exchange-coupling magnetic field Hua is generated in a magnetization direction agreeing with the X direction because of a exchange coupling between the pinned magnetic layer 16 and the antiferro-magnetic layer 17. Therefore, the pinned magnetic layer 16 is fixedly magnetized in the X direction, a magnetized direction of the layer 16 is not changed by a signal magnetic field Hsig of which an intensity changes in the X direction.

In the above configuration of the spin valve magneto-resistive effect device, the free magnetic layer 14 is composed of two layers of the NiFe layer 14a and the Co₉₀Fe₁₀ layer 14b. The free magnetic layer 14 has a softened magnetic property because of a exchange coupling of the NiFe layer 14a and the Co₉₀Fe₁₀ layer 14b, and the Co₉₀Fe₁₀ layer 14b functions to prevent a interfacial diffusion of NiFe and Cu between the NiFe layer 14a and the non-magnetic metal layer 15 caused by heating the layers 14a and 15.

Though a coercive force Hc of a CoFe magnetic body is minimized in cases where a composition ratio of Co to Fe in the CoFe magnetic body is set to a specific composition ratio 90/10 to form the CoFe magnetic body into a Co₉₀Fe₁₀ body, in cases where a difference between a real composition ratio of Co and Fe in the Co₉₀Fe₁₀ layer 14b and the specific composition ratio is within a several percentages, the difference is allowable.

A magnetization M1 of the free magnetic layer 14 having the two-layer structure is directed in the Y direction (or a magnetization easy axis direction) perpendicular to the magnetization direction (or the X direction) of the pinned magnetic layer 16 in cases where a strength of the signal magnetic field Hsig is zero. The direction of the magnetization M1 in the free magnetic layer 14 changes when a magnetization component of the signal magnetic field Hsig directed in the X direction is applied to the spin valve magneto-resistive effect device.

A total electric resistance of the multilayer structure ranging from the under layer 13 to the antiferro-magnetic layer 17 changes in proportional to a cosine (cosθ) of an angle θ between the magnetization direction of the pinned magnetic layer 16 and the magnetization direction of the free magnetic layer 14. A constant current passes through the signal detecting region (or the sensing region) S placed in the multilayer structure from one electrode terminal 18 to the other electrode terminal 18. When the total electric resistance changes, a differential voltage between the electrode terminals 18 changes. The change of the total electric resistance is calculated according to the Ohm's law by detecting the change of the differential voltage.

Magneto-resistive (MR) characteristics in the spin valve magneto-resistive effect device are described.

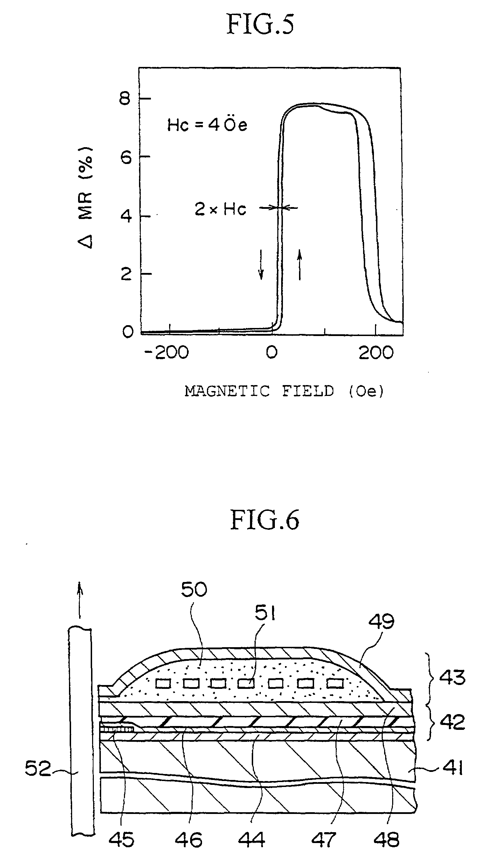

As shown in Fig. 5, MR characteristics (the relationship between the change of a magnetic field strength and a changing ratio ΔMR of an electric resistance) in the spin valve magneto-resistive effect device are experimentally obtained by continuously increasing and decreasing the strength of an external magnetic field in a range from -200 oersteds (Oe) to 200 oersteds (Oe). As a result of the experiment, a coercive force Hc of the spin valve magneto-resistive effect device is considerably decreased to 4 oersteds (Oe) and is almost equal to that of NiFe. In addition, a changing ratio ΔMR of an electric resistance becomes high as compared with that in the conventional magnetic head shown in Fig. 2, and sensitivity for the signal magnetic field Hsig is improved.

The reason that the coercive force Hc of the spin valve magneto-resistive effect device is decreased is because the Co₉₀Fe₁₀ layer 14b is adopted as one of the layers in the free magnetic layer 14 manufactured in two-layer structure. In addition, because a film thickness of the Co₉₀Fe₁₀ layer 14b is 55Å, the interfacial diffusion of NiFe and Cu between the NiFe layer 14a and the non-magnetic metal layer 15 caused by heating the layers 14a and 15 can be prevented by the Co₉₀Fe₁₀ layer 14b. In detail, in cases where a solid solubility between Ni and Cu is 100, a solid solubility between Fe and Cu and a solid solubility between Co and Cu are respectively in a range from 4 to 5. Therefore, a interfacial diffusion of CoFe and Cu between the Co₉₀Fe₁₀ layer 14b and the non-magnetic metal layer 15 does not occur. As a result, a soft magnetic property of the free magnetic layer 14 can be preferably maintained. In this case, it is required to set the film thickness of the NiFe layer 14a to 10 Å or more for the purpose of decreasing the coercive force Hc of the spin valve magneto-resistive effect device.

In this embodiment, the NiFe layer 14a is used. However, it is applicable that an alloy be made of NiFeCr, NiFeNb, NiFeRh or the like obtained by mixing NiFe with an atomic element and an NiFe type alloy layer made of the alloy be used in place of the NiFe layer 14a. Because the anisotropic magneto-resistive (AMR) effect causing noises in the spin valve magneto-resistive effect is considerably reduced by using the NiFe type alloy layer as compared with the reduction of the AMR effect in case of the use of the NiFe layer 14a, a signal-noise (S/N) ratio can be moreover heightened. Also, because a specific resistance of the NiFe type alloy layer is higher than that of the NiFe layer 14a, a current utilizing efficiency in the spin valve magneto-resistive effect device can be moreover heightened, and an output intensity of a reading signal can be moreover heightened.

Next, a magnetic head of a magnetic recording apparatus, in which the spin valve magneto-resistive effect device according to the present invention is adopted, and a magnetic recording medium are described with reference to Fig. 6.

As shown in Fig. 6, a magnetic head of a magnetic disc drive comprises a substrate (or a slider) 41, a reproducing head 42 placed on the substrate 41 and a recording head 43 adjacent to the reproducing head 42. The reproducing head 42 comprises a first magnetic shielding layer 44, the spin valve MR effect device 45 placed on the first magnetic shielding layer 44 through an insulating film (not shown), an electrode terminal (or leading terminal) 46 lead from the spin valve MR effect device 45, an insulating film 47 for covering the spin valve MR effect device 45 and the electrode terminal 46, and a second magnetic shielding layer 48 placed on the insulating film 47.

The configuration of the spin valve MR effect device 45 is shown in Figs. 4A and 4B. However, it is applicable that the spin valve MR effect device 45 comprise the substrate 11, the alumina layer 12, the under layer 13, the antiferro-magnetic layer 17, the pinned magnetic layer 16, the non-magnetic metal layer 15 and the free magnetic layer 14 arranged in that order.

The recording head 43 comprises a third magnetic shielding layer 49 placed on the second magnetic shielding layer 48, an insulating layer 50 packed in a space surrounded by the second and third magnetic shielding layers 48 and 49, and a coil 51 buried in the insulating layer 50.

The first, second and third magnetic shielding layers 44, 48 and 50 are respectively formed out of a soft magnetic body, and a gap is formed in a space between a magnetic recording medium 52 and each of the first, second and third magnetic shielding layers 44, 48 and 50.

As is described above, because the spin valve MR effect device 45 has the free magnetic layer 14, which is manufactured in a two-layer structure, composed of the NiFe layer 14a and the CoFe layer 14b or another two-layer structure composed of the NiFe type alloy layer and the CoFe layer 14b, the coercive force Hc of the spin valve magneto-resistive effect magnetic head can be made small.

Also, in cases where the film thickness of the NiFe layer 14a is set to 10 Å or more, a composition ratio of Co in the CoFe layer 14b is set in a range from 95 to 85 wt% and a composition ratio of Fe in the CoFe layer 14b is set in a range from 5 to 15 wt%, the coercive force Hc of the spin valve magneto-resistive effect magnetic head is considerably reduced. In particular, in cases where a composition ratio of Co set to 90 wt% and a composition ratio of Fe set to 10 wt% are adopted in the CoFe layer 14b, the coercive force Hc can be minimized.

Also, in cases where the film thickness of the NiFe layer 14a is set to 30Å or more, the interfacial diffusion of NiFe and Cu between the NiFe layer 14a and the non-magnetic metal layer 15 caused by heating the layers 14a and 15 can be reliably prevented by the Co₉₀Fe₁₀ layer 14b, and the softened magnetic property of the free magnetic layer 14 can be preferably maintained.

Also, a changing ratio of an electric resistance of the magnetic head changing with the strength of a magnetic field can be increased because the free magnetic layer 14 manufactured in the two-layer structure having the CoFe layer 14b is provided for the magnetic head.

In cases where the NiFe type alloy layer is made of NiFeCr, NiFeNb or NiFeRh, noises in the magnetic head caused according to the AMR effect can be reduced. In addition, because a specific resistance of NiFeCr, NiFeNb or NiFeRh is higher than that of NiFe, a current utilizing efficiency in the magnetic head can be heightened, and a reading signal having a high intensity can be output.

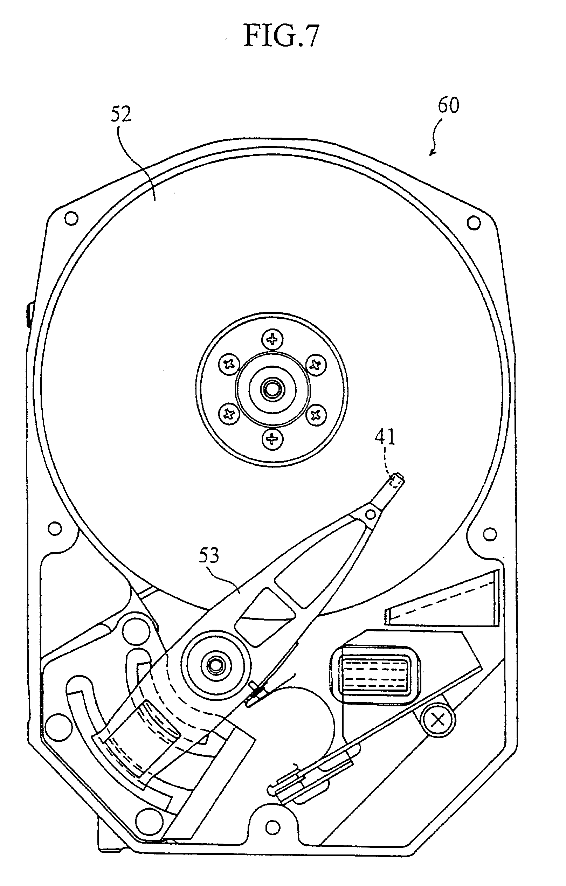

As shown in Fig.7, a magnetic desk drive 60 comprises the magnetic disc 51, and the slider 41 having the MR head, and a spring arm 53 supporting the slider 41.

## Claims

1. A spin valve magneto-resistive effect magnetic head, comprising:
a free magnetic layer (14) including an NiFe layer (14a) and a CoFe layer (14b) formed on the NiFe layer (14a);
a non-magnetic layer (15) formed on the free magnetic layer (14);
a pinned magnetic layer (16) formed on the non-magnetic layer (15);
an antiferro-magnetic layer (17) for fixing a magnetization direction of the pinned magnetic layer (16) and the antiferro-magnetic layer (17); and
a pair of electrode terminals (18) for passing a current through the free magnetic layer (14), the non-magnetic layer (15), the pinned magnetic layer (16) and the antiferro-magnetic layer (17);
**characterized in that** a range of composition ratio of Co in the Core layer (14b) is from 95 to 85 wt% and a range of a composition ratio of Fe in the CoFe layer is from 5 to 15 wt%,
the CoFe layer (14b) being a blocking layer for preventing thermal interdiffusion between the NiFe layer (14a) and the non-magnetic layer (15).

2. A spin valve magneto-resistive effect magnetic head, according to claim 1 in which a film thickness of the NiFe layer (14a) is 1 nm (10 Å) or more.

3. A spin valve magneto-resistive effect magnetic head according to claim 1, in which the NiFe layer (14a) is an alloy layer additionally including an atomic element selected from the group consisting of Cr, Nb and Rh.

4. A spin valve magneto-resistive effect magnetic head, according to claim 3 in which a film thickness of the NiFe type alloy layer (14a) is 1 nm (10 Å) or more.

5. A spin valve magneto-resistive effect magnetic head, according to claim 3 in which the NiFe type alloy layer (14a) is made of an alloy obtained by adding a third atomic element to the NiFe to reduce an anisotropic magneto-resistive effect as compared with that in case of NiFe.

6. A spin valve magneto-resistive effect magnetic head, according to claim 3 in which the NiFe type alloy layer (14a) is made of an alloy selected from the group consisting of NiFeCr, NiFeNb and NiFeRh.

7. A spin valve magneto-resistive effect magnetic head, according to claim 1 or 3 in which a composition ratio of Co in the CoFe layer (14b) is 90 wt% and a composition ratio of Fe in the CoFe layer (14b) is 10 wt%.

8. A spin valve magneto-resistive effect magnetic head, according to claim 1 or 3 in which the pinned magnetic layer (16) is made of CoFe.

9. A spin valve magneto-resistive effect magnetic head, according to claim 1 or 3 in which the non-magnetic layer (15) is made of Cu.

10. A spin valve magneto-resistive effect magnetic head, according to claim 1 or 3 in which a film thickness of the CoFe layer is 30A or more.

11. A system comprising:
a magnetic recording medium (52) for recording magnetic recording information; and
a spin valve magneto-resistive effect magnetic head (41) for writing the magnetic recording information in the magnetic recording medium (52) and reading out the magnetic recording information from the magnetic recording medium (52), comprising:
a free magnetic layer (14) including an NiFe layer (14a) and a CoFe layer (14b) formed on the NiFe layer (14a);
a non-magnetic layer (15) formed on the free magnetic layer (14);
a pinned magnetic layer (16) formed on the non-magnetic layer (15);
an antiferro-magnetic layer (17) for fixing a magnetization direction of the pinned magnetic layer (16) and the antiferro-magnetic layer (17); and
a pair of electrode terminals (18) for passing a current through the free magnetic layer (14), the non-magnetic layer (15), the pinned magnetic layer (16) and the antiferro-magnetic layer (17);
**characterized in that** a range of composition ratio of Co in the CoFe layer (14b) is from 95 to 85 wt% and a range of a composition ratio of Fe in the CoFe layer is from 5 to 15 wt%,
the CoFe layer (14b) being a blocking layer for preventing thermal interdiffusion between the NiFe layer (14a) and the non-magnetic layer (15).

## Patentansprüche

1. Magnetkopf mit Spinventil-Magnetowiderstandseffekt, aufweisend:
eine freie magnetische Schicht (14), die eine NiFe-Schicht (14a) und eine auf der NiFe-Schicht (14a) geschaffene CoFe-Schicht (14b) enthält;
eine auf der freien magnetischen Schicht (14b) geschaffene nicht magnetische Schicht (15);
eine auf der nicht magnetischen Schicht (15) geschaffene feste magnetische Schicht (16);
eine antiferromagnetische Schicht (17) zum Fixieren einer Magnetisierungsrichtung der festen magnetischen Schicht (16) und der antiferromagnetischen Schicht (17); und
ein Paar Elektrodenanschlüsse (18) zum Durchleiten eines Stroms durch die freie magnetische Schicht (14), die nicht magnetische Schicht (15), die feste magnetische Schicht (16) und die antiferromagnetische Schicht (17);
**dadurch gekennzeichnet, daß** ein Bereich eines Zusammensetzungsverhältnisses von Co in der CoFe-Schicht (14b) zwischen 95 und 85 Gew.-% beträgt und ein Bereich eines Zusammensetzungsverhältnisses von Fe in der CoFe-Schicht zwischen 5 bis 15 Gew.-% beträgt,
welche CoFe-Schicht (14b) eine blockierende Schicht ist, um eine thermische Interdiffusion zwischen der NiFe-Schicht (14a) und der nicht magnetischen Schicht (15) zu verhindern.

2. Magnetkopf mit Spinventil-Magnetowiderstandseffekt, nach Anspruch 1, in welchem eine Filmdicke der NiFe-Schicht (14a) 1 nm (10 Å) oder mehr beträgt.

3. Magnetkopf mit Spinventil-Magnetowiderstandseffekt nach Anspruch 1, in welchem die NiFe-Schicht (14a) eine Legierungsschicht ist, die zusätzlich ein aus der aus Cr, Nb und Rh bestehenden Gruppe ausgewähltes atomares Element enthält.

4. Magnetkopf mit Spinventil-Magnetowiderstandseffekt nach Anspruch 3, in welchem eine Filmdicke der Legierungsschicht (14a) vom NiFe-Typ 1 nm (10 Å) oder mehr beträgt.

5. Magnetkopf mit Spinventil-Magnetowiderstandseffekt nach Anspruch 3, in welchem die Legierungsschicht (14a) vom NiFe-Typ aus einer Legierung hergestellt ist, die erhalten wird, indem ein drittes atomares Element zu dem NiFe addiert wird, um einen anisotropen Magnetowiderstandseffekt im Vergleich zu dem im Fall von NiFe zu reduzieren.

6. Magnetkopf mit Spinventil-Magnetowiderstandseffekt nach Anspruch 3, in welchem die Legierungsschicht (14a) vom NiFe-Typ aus einer aus der aus NiFeCr, NiFeNb und NiFeRh bestehenden Gruppe ausgewählten Legierung hergestellt ist.

7. Magnetkopf mit Spinventil-Magnetowiderstandseffekt nach Anspruch 1 oder 3, in welchem ein Zusammensetzungsverhältnis von Co in der CoFe-Schicht (14b) 90 Gew.-% beträgt und ein Zusammensetzungsverhältnis von Fe in der CoFe-Schicht (14b) 10 Gew.-% beträgt.

8. Magnetkopf mit Spinventil-Magnetowiderstandseffekt nach Anspruch 1 oder 3, in welchem die feste magnetische Schicht (16) aus CoFe hergestellt ist.

9. Magnetkopf mit Spinventil-Magnetowiderstandseffekt nach Anspruch 1 oder 3, in welchem die nicht magnetische Schicht (15) aus Cu hergestellt ist.

10. Magnetkopf mit Spinventil-Magnetowiderstandseffekt nach Anspruch 1 oder 3, in welchem eine Filmdicke der CoFe-Schicht 30 Å oder mehr beträgt.

11. System, aufweisend:
ein magnetisches Aufzeichnungsmedium (52) zum Aufzeichnen einer magnetischen Aufzeichnungsinformation; und
einen Magnetkopf (41) mit Spinventil-Magnetowiderstandseffekt zum Schreiben der magnetischen Aufzeichnungsinformation in dem magnetischen Aufzeichnungsmedium (52) und Auslesen der magnetischen Aufzeichnungsinformation von dem magnetischen Aufzeichnungsmedium (52), aufweisend:
eine freie magnetische Schicht (14), die eine NiFe-Schicht (14a) und eine auf der NiFe-Schicht (14a) geschaffene CoFe-Schicht (14b) enthält;
eine auf der freien magnetischen Schicht (14b) geschaffene nicht magnetische Schicht (15);
eine auf der nicht magnetischen Schicht (15) geschaffene feste magnetische Schicht (16);
eine antiferromagnetische Schicht (17) zum Fixieren einer Magnetisierungsrichtung der festen magnetischen Schicht (16) und der antiferromagnetischen Schicht (17); und
ein Paar Elektrodenanschlüsse (18) zum Durchleiten eines Stroms durch die freie magnetische Schicht (14), die nicht magnetische Schicht (15), die feste magnetische Schicht (16) und die antiferromagnetische Schicht (17);
**dadurch gekennzeichnet, daß** ein Bereich eines Zusammensetzungsverhältnisses von Co in der CoFe-Schicht (14b) zwischen 95 und 85 Gew.-% beträgt und ein Bereich eines Zusammensetzungsverhältnisses von Fe in der CoFe-Schicht zwischen 5 und 15 Gew.-% beträgt,
welche CoFe-Schicht (14b) eine blockierende Schicht ist, um thermische Interdiffusion zwischen der NiFe-Schicht (14a) und der nicht magnetischen Schicht (15) zu verhindern.

## Revendications

1. Tête magnétique à effet magnétorésistif à soupape de spin, comprenant :
une couche magnétique libre (14) comprenant une couche de NiFe (14a) et une couche de CoFe (14b) formées sur la couche NiFe (14a) ;
une couche non-magnétique (15) formée sur la couche magnétique libre (14) ;
une couche magnétique piégée (16) formée sur la couche non-magnétique (15) ;
une couche anti-ferromagnétique (17) pour fixer une direction de magnétisation de la couche magnétique piégée (16) et la couche anti-ferromagnétique (17) ; et
une paire de bornes d'électrodes (18) pour passer un courant à travers la couche magnétique libre (14), la couche non-magnétique (15), la couche magnétique piégée 16 et la couche anti-ferromagnétique 17 ;
**caractérisée en ce qu'**une gamme de taux de composition de Co dans la couche de CoFe (14b) est de 95 à 85% en poids et une gamme de taux de composition de Fe dans la couche de CoFe et de 5 à 15% en poids,
la couche de CoFe (14b) étant une couche de blocage pour empêcher l'inter-diffusion thermique entre la couche de NiFe (14a) et la couche non-magnétique (15).

2. Tête magnétique à effet magnéto-résistif à soupape de spin, selon la revendication 1 dans laquelle une épaisseur de film de la couche NiFe (14a) est de 1nm (10 À) ou plus.

3. Tête magnétique à effet magnéto-résistif à soupape de spin selon la revendication 1, dans laquelle la couche de NiFe (14a) est une couche d'alliage contenant en plus un élément atomique sélectionné à partir du groupe se composant de Cr, Nb et Rh.

4. Tête magnétique à effet magnéto-résistif à soupape de spin, selon la revendication 3 dans laquelle l'épaisseur de film de la couche d'alliage de type NiFe (14a) est de 1 nm (10 Å) ou plus.

5. Tête magnétique à effet magnéto-résistif à soupape de spin, selon la revendication 3 dans laquelle la couche d'alliage du type NiFe (14a) est faite d'un alliage obtenu en ajoutant un troisième élément atomique au NiFe pour réduire un effet magnéto-résistif anisotropique comparé à celui dans le cas de NiFe.

6. Tête magnétique à effet magnéto-résistif à soupape de spin, selon la revendication 3 dans laquelle la couche d'alliage de type NiFe (14a) est faite d'un alliage sélectionné à partir du groupe se composant de NiFeCr, NiFeNb et NiFeRh.

7. Tête magnétique à effet magnéto-résistif à soupape de spin, selon la revendication 1 ou 3 dans laquelle un taux de composition de Co dans la couche de CoFe (14b) est de 90% en poids et un taux de composition de Fe dans la couche CoFe (14b) est de 10% en poids.

8. Tête magnétique à effet magnéto-résistif à soupape de spin, selon la revendication 1 ou 3 dans laquelle la couche magnétique piégée (16) est faite de CoFe.

9. Tête magnétique à effet magnéto-résistif à soupape de spin, selon la revendication 1 ou 3 dans laquelle la couche non-magnétique (15) est faite de Cu.

10. Tête magnétique à effet magnéto-résistif à soupape de spin, selon la revendication 1 ou 3 dans laquelle une épaisseur de film de la couche de CoFe est de 30 À ou plus.

11. Système comprenant :
un support d'enregistrement magnétique (52) pour enregistrer des informations d'enregistrement magnétique ; et
une tête magnétique à effet magnéto-résistif à soupape de spin (40) pour écrire des informations d'enregistrement magnétique dans le support d'enregistrement magnétique (52) et extraire les informations d'enregistrement magnétique du support d'enregistrement magnétique (52), comprenant :
une couche magnétique libre (14) comprenant une couche de NiFe (14a) et une couche de CoFe (14b) formée sur la couche de NiFe (14a) ;
une couche non-magnétique (15) formée sur la couche magnétique libre (14) ;
une couche magnétique (piégée) (16) formée sur la couche non-magnétique (15) ;
une couche anti-ferromagnétique (17) pour fixer une direction de magnétisation de la couche magnétique piégée (16) et la couche anti-ferromagnétique (17) ; et
une paire de bornes d'électrodes (18) pour passer un courant à travers la couche magnétique libre (14), la couche non-magnétique (15), et la couche magnétique piégée (16) et la couche anti-ferromagnétique (17) ;
**caractérisé en ce qu'**une gamme de taux de composition de Co dans la couche de CoFe (14b) est de 95 à 85% en poids et une gamme de taux de composition de Fe dans la couche de CoFe est de 5 à 15% en poids ;
la couche de CoFe (14b) étant une couche de blocage pour empêcher une inter-diffusion thermique entre la couche NiFe (14a) et la couche non-magnétique (15).
